# EUROPÄISCHE PATENTSCHRIFT

(11) **EP 2 387 517 B1**
(45) Veröffentlichungstag und Bekanntmachung des Hinweises auf die Patenterteilung: **14.08.2013**
(21) Anmeldenummer: 10731485.8
(22) Anmeldetag: 16.06.2010
(51) Int. Cl.: B60R 21/203

(54) **GASSACKMODUL FÜR EIN FAHRZEUGINSASSEN-RÜCKHALTESYSTEM**
AIRBAG MODULE FOR A VEHICLE PASSENGER RESTRAINT SYSTEM
MODULE DE SAC GONFLABLE POUR UN SYSTÈME DE RETENUE D'OCCUPANT DE VÉHICULE

(30) Priorität: 19.06.2009 DE 102009030149
(43) Veröffentlichungstag der Anmeldung: 23.11.2011
(73) Patentinhaber: Takata AG, 63743 Aschaffenburg (DE)
(72) Erfinder: GAUMANN, Udo, 63834 Sulzbach (DE); SAUER, Frank, 63843 Niedernberg (DE); WEIGAND, Steffen, 63739 Aschaffenburg (DE)
(74) Vertreter: Müller, Wolfram Hubertus
(86) Internationale Anmeldenummer: PCT/EP2010/058467
(87) Internationale Veröffentlichungsnummer: WO 2011/003710

(56) Entgegenhaltungen:
- WO-A2-03/076230
- DE-U1- 29 918 483
- US-A- 5 829 777
- US-A1- 2006 202 449

## Beschreibung

Die Erfindung betrifft ein Gassackmodul für ein Fahrzeuginsassen-Rückhaltesystem gemäß dem Oberbegriff des Anspruchs 1.

Im Innendesign von Kraftfahrzeugen besteht zunehmend der Wunsch, einen hohen Individualisierungsgrad durch individuelle Form- und Farbgebungen bereitzustellen.

Die Druckschrift DE 101 64 210 A1 beschreibt eine Innenverkleidung in einem Fahrzeug, die einen Austrittsbereich eines Gassacks überdeckt. In einer Ausgestaltung ist vorgesehen, dass der Austrittsbereich sich in einem Dekoreinsatz der Innenverkleidung befindet. Die Druckschrift DE 200 16 493 U1 offenbart ein Verkleidungselement für die Innenauskleidung eines Personenkraftfahrzeuges, die aus einer länglichen, starren Tragplatte besteht, die zum Fahrgastraum konkav gewölbt und mit einem Dekorbezug versehen ist. Eine Aufreißnaht zur Bereitstellung einer Durchtrittsöffnung für einen Gassack erstreckt sich dabei über die Sichtfläche der Tragplatte und des Dekorbezugs.

Aus der Druckschrift US 5 829 777 A ist eine Gassackvorrichtung nach dem Oberbegriff des Anspruchs 1 bekannt, die zwei Betätigungsschalter zum Betätigen einer Hupe umfasst. Die Betätigungsschalter weisen herunterdrückbare Betätigungsbereiche auf, die Teil der Sichtfläche der Gassackvorrichtung bilden.

Das Pkw-Modell Fiat 500 (Modelljahr 2007/2008) des Automobilherstellers Fiat SpA implementiert ein Gassackmodul mit einer Sichtfläche, die durch zwei Teile mit unterschiedlichen Oberfläche gebildet wird, wobei das eine Teil mittig ausgebildet ist und sich im Auslösefall durch Ausrasten vollständig von dem umgebenden Rahmenteil trennt. Es wird im ausgerasteten Zustand durch einen Gurt am Modul gehalten.

Der vorliegenden Erfindung liegt die Aufgabe zugrunde, ein Gassackmodul für ein Fahrzeuginsassen-Rückhaltesystem zur Verfügung zu stellen, das verbesserte designerische Gestaltungsmöglichkeiten erlaubt.

Diese Aufgabe wird erfindungsgemäß durch ein Gassackmodul mit den Merkmalen des Anspruchs 1 gelöst. Ausgestaltungen der Erfindung sind in den Unteransprüchen angegeben.

Danach betrifft die Erfindung ein Gassackmodul für ein Fahrzeuginsassen-Rückhaltesystem, das einen Gassack umfasst und eine im eingebauten Zustand dem Fahrzeuginnenraum zugewandte Sichtfläche aufweist, die durch unterschiedliche Segmente gebildet ist, wobei mindestens zwei der Segmente optisch und/oder haptisch unterschiedliche Oberflächen aufweisen. Es ist vorgesehen, dass mindestens zwei der Segmente der Sichtfläche jeweils mindestens eine mechanische Schnittstelle aufweisen, mittels derer sie unter Ausbildung eines Verbindungsbereichs mechanisch mit mindestens einem der anderen Segmente verbindbar sind, und mindestens eines der Segmente der Sichtfläche mindestens eine Aufreißlinie ausbildet, wobei bei Aufreißen der Aufreißlinie im Auslösefall eine Öffnung in der Sichtfläche entsteht, durch die der Gassack aus dem Gassackmodul austreten kann. Die mechanischen Schnittstellen sind dabei derart ausgebildet, dass sie bei einem Aufreißen der Aufreißlinie Bestand haben und nicht öffnen. Die Aufreißlinie zur Bereitstellung einer Öffnung für den sich entfaltenden Gassack ist also getrennt ausgeführt von den mechanischen Schnittstellen zur Verbindung zweier Segmente.

Die erfindungsgemäße Lösung erlaubt die Realisierung sich optisch und/oder haptisch unterscheidender Oberflächen und damit eines unterschiedlichen Styling unterschiedlicher Segmente, die die Sichtfläche des Gassackmoduls bilden. Die Sichtfläche kann in unterschiedliche Styling-Segmente aufgeteilt werden. Die einzelnen Segmente können unabhängig von den anderen Segmenten eine Oberflächenveredelung erfahren, so dass eine Oberflächenveredelung einer der Segmente nicht zu Zusatzkosten bei anderen, nicht veredelten Segmenten führt. Die Trennung der Aufreißlinie zur Bereitstellung einer Öffnung für den sich entfaltenden Gassack von den mechanischen Schnittstellen zur Verbindung zweier Segmente ermöglicht dabei, den Sichtbereich des Gassackmoduls primär nach designerischen Gesichtspunkten in unterschiedliche Segmente zu unterteilen, z.B. im Hinblick auf Größe und Lage der einzelnen Segmente, da die Funktionalität des Aufreißens des Sichtbereichs im Auslösefall durch ein oder mehrere Aufreißlinien bereitgestellt wird, die unabhängig von den mechanischen Schnittstellen ausgeführt sind.

Dabei kann beliebig gewählt werden, welche der unterschiedlichen Segmente, die die Sichtfläche des Gassackmoduls bilden, einer Oberflächenveredelung bzw. einem bestimmten Styling zugeführt werden sollen. Damit ist es insbesondere möglich, gezielt definierte Segmente, kundenwunschabhängig, mit einer bestimmten Oberfläche zu versehen.

Zwei Oberflächen unterscheiden sich optisch im Sinne der vorliegenden Erfindung, wenn sie eine unterschiedliche Farbe und/oder unterschiedliche Lichtreflexionseigenschaften aufweisen, beispielsweise unterschiedliche Glanzwerte oder Mattwerte ausbilden. Zwei Oberflächen unterscheiden sich haptisch im Sinne der vorliegenden Erfindung, wenn sie aus unterschiedlichen Materialien bestehen und/oder unterschiedliche Oberflächenstrukturen aufweisen. Eine optisch und/oder haptisch unterschiedliche Ausgestaltung einer Oberfläche wird auch als Oberflächenveredelung bezeichnet. Die unterschiedliche Oberflächenveredelung geht einher mit einem unterschiedlichen Styling eines betrachteten Segments.

In einer Ausgestaltung der Erfindung ist vorgesehen, dass die Aufreißlinie derart ausgebildet ist, dass sie entlang (d.h. auf, parallel zu oder benachbart) einer mechanischen Schnittstelle verläuft. Die Aufreißlinie ist dabei jedoch unabhängig von der mechanischen Schnittstelle und nicht durch diese ausgebildet. Die Aufreißlinie folgt in dieser Ausgestaltung im Wesentlichen der Verbindungslinie zweier Segmente und verläuft damit beispielsweise zumindest in einem Teilbereich im Wesentlichen entlang mindestens einer Segmentgrenze. Die Aufteilung der Sichtfläche entspricht in diesem Fall den Öffnungsverläufen für die Gassackausbringung. Dies ist besonders effektiv, da keine gesonderte Strukturierung der Segmente außerhalb des Verbindungsbereichs erforderlich ist.

Bei Aufreißen der Aufreißlinie kann in Abhängigkeit davon, wie die Aufreißlinie in einem der Segmente ausgebildet ist, der durch die mechanischen Schnittstellen gebildete mechanische Verbindungsbereich sich in seiner räumlichen Position verändern, etwa zusammen mit einem Segment aufklappen, oder räumlich unverändert bleiben. In jedem Fall öffnen die mechanischen Schnittstellen zwischen den Segmenten bei Aufreißen der Aufreißlinie nicht.

In einer anderen Ausgestaltung der Erfindung ist dagegen vorgesehen, dass die Aufreißlinie derart in einem Segment ausgebildet ist, dass sie nicht der mechanischen Schnittstelle des Segments folgt. Dabei wird ausgenutzt, dass die Aufreißlinie gemäß der vorliegenden Erfindung getrennt von den mechanischen Schnittstellen ausgebildet ist, so dass sie einen unterschiedlichen Verlauf nehmen kann, mit dem Vorteil einer zusätzlichen Designfreiheit bei der Wahl der Größe und Form der einzelnen Segmente.

In einer Ausgestaltung der Erfindung ist vorgesehen, dass die mechanischen Schnittstellen im Wesentlichen entlang der Segmentgrenzen verlaufen, obwohl dies nicht zwingend der Fall ist. Weiter ist vorgesehen, dass die durch zwei Schnittstellen gebildete mechanische Verbindung zwischen zwei Segmenten unlösbar ist, d.h. die Schnittstellen öffnen unter Krafteinwirkung, insbesondere bei einem Auflasen des Gassacks im Auslösfall nicht. Zur Realisierung der Schnittstellen können beliebige mechanische Verbindungsmittel vorgesehen sein, beispielsweise miteinander korrespondierende Formschlusselemente in den zu verbindenden Bereichen oder Klebemittel.

Die unterschiedlichen Segmente des Gassackmoduls, die die Sichtfläche bilden, werden in einer Ausführungsvariante durch eine Abdeckkappe, die im Auslösefall zumindest teilweise aufklappt und/oder aufreißt, und/oder durch sichtbare Bereiche eines Modulgehäuses des Gassackmoduls gebildet. Beispielsweise wird die Sichtfläche durch ein erstes Segment, das durch die Abdeckkappe gebildet ist, und ein zweites Segment, das durch einen an dem Modulgehäuse ausgebildeten Kappenrahmen gebildet ist, gebildet. In einem anderen Beispiel werden die unterschiedlichen Segmente durch unterschiedliche Segmente einer modularen Abdeckkappe des Gassackmoduls gebildet.

In einer weiteren Ausgestaltung der Erfindung ist vorgesehen, dass zur Realisierung einer optisch und/oder haptisch unterschiedlichen Oberfläche die Oberfläche eines Segments durch eine Kunststofffolie gebildet wird. Hierbei können unterschiedliche Foliendesigns appliziert werden, ohne dass das Trägermaterial geändert werden müsste. Zur Erzeugung einer solchen Oberflächenveredelung wird beispielsweise eine vordekorierte Folie mit einem spritzgussgeeigneten Kunststoff hinterspritzt. Hierdurch können beispielsweise glatte, hochglänzende Oberflächen auf weichen Airbagsubstraten erzeugt werden. Alternativ sind jedoch auch andere Verfahren, wie beispielsweise Kleben, Heißprägen, Dip Printen etc. zur Applikation einer veredelnden Oberfläche möglich.

Ein Hinterspritzen eines Oberflächenmaterials kann statt auf der Basis einer Kunststofffolie auch mit anderen Trägern oder Laminaten erfolgen. Beispielsweise kann ein Gewebe oder ein Lederzuschnitt hinterspritzt werden. In jedem Falle weist das Hinterspritzen eines Oberflächenmaterials den Vorteil auf, dass die Flexibilität des hinterspritzten Bereiches erhalten bleibt. Dies ist besonders vorteilhaft, wenn das mit einer Oberflächenveredelung versehene Segment sich im Bereich der Austrittsfläche des Gassacks des Gassackmoduls befindet.

Im Fall der Hinterspritzung eines Segments mit einer Kunststofffolie stellt die Kunststofffolie die dem Fahrzeuginsassen zugewandte Oberfläche des betrachteten Segments dar. Es kann dabei vorgesehen sein, spezielle, eine hohe Kratzfestigkeit aufweisende Folientypen als Stylingoberfläche zu nutzen. Dies ist insbesondere bei hochglänzenden und glatten Oberflächen von Vorteil.

Die einzelnen Segmente werden erst nach dem Anbringen einer Oberflächenveredelung an mindestens einem der Segmente miteinander verbunden. Dies weist den Vorteil auf, dass der Übergang zwischen den unterschiedlichen Segmenten aufgrund der Verbindung der einzelnen Segmente erst nach Anbringen einer Oberflächenveredelung klar gegeneinander abgegrenzt ist. Die einzelnen Segmente sind damit deutlich und klar gegeneinander abgegrenzt.

Es kann des Weiteren vorgesehen sein, dass eine Aufreißlinie für den sich entfaltenden Gassack innerhalb eines Segmentes verläuft und dabei durch die veredelnde Oberfläche des entsprechenden Segmentes verdeckt wird. Beispielsweise wird ein Segment durch eine hinterspritzte Kunststofffolie gebildet. Nach der Ausbildung der Aufreißlinien im Kunststoff werden diese durch die Kunststofffolie verdeckt, so dass sie nicht sichtbar sind und im Bereich von Aufreißlinien häufig eintretende optische Beeinträchtigungen wie Schlieren sicher vermieden werden. Durch die Oberflächenveredelung kann darüber hinaus auch der Verbindungsbereich eines veredelten Segmentes mit einem anderen Segment verdeckt werden. Insgesamt führt dies zu einem Sinken von Ausschussraten und eventuell notwendigen kostenintensiven Maßnahmen an den Herstellungswerkzeugen.

Durch die Abdeckung einer Aufreißlinie durch die Oberflächenveredelung besteht darüber hinaus die Möglichkeit, eine Aufreißlinie lokal zu öffnen (das heißt zu perforieren), um ein leichteres Kappenöffnen bei der Gassackauslösung zu erreichen.

Eine solche Perforation wäre ohne eine abdeckende Oberflächenveredelung aus ästhetischen Gründen problematisch. Insofern erhöht die Oberflächenveredelung die möglichen Realisierungsformen zur Ausbildung von Aufreißlinien in einer Abdeckkappe bzw. in Segmenten, die eine Abdeckkappe bilden.

Es wird darauf hingewiesen, dass die optisch und/oder haptisch unterschiedlichen Oberflächen der Segmente, die die Sichtfläche des Gassackmoduls bilden, mit weiteren Komponenten versehen werden können, beispielsweise mit Emblemen oder Zierelementen. Diese werden beispielsweise auf ein mit einer Oberflächenveredelung versehenes Segment aufgeklebt. Die Verbindung kann beispielsweise durch thermisches Verschweißen, Kleben, Rasten etc. erfolgen. Durch die Anbringung solcher Embleme oder Zierelemente auf herkömmlich ausgebildeten Sichtflächen werden jedoch keine optisch und/oder haptisch unterschiedlichen Oberflächen im Sinne der vorliegenden Erfindung bereitgestellt, da solche Embleme und Zierelemente zum einen nicht unmittelbar die Oberfläche eines betrachteten Segments bilden und zum anderen nur Teilbereiche der Sichtfläche eines Segmentes abdecken.

Die Erfindung wird nachfolgend unter Bezugnahme auf die Figuren der Zeichnung anhand mehrerer Ausführungsbeispiele näher erläutert. Es zeigen:
- Fig. 1: eine Draufsicht auf die Sichtfläche eines Gassackmoduls gemäß einem Ausführungsbeispiel der Erfindung;
- Fig. 2: eine Explosionsdarstellung der Komponenten des Gassackmoduls der Figur 1;
- Fig. 3: einen Schnitt durch das Gassackmodul der Figur 1 entlang der Linie A-A;
- Fig. 4: eine vergrößerte Darstellung des Bereichs A der Figur 3; und
- Fig. 5: eine Draufsicht auf den Kappenrahmen des Gassackmoduls der Figuren 1 bis 4.

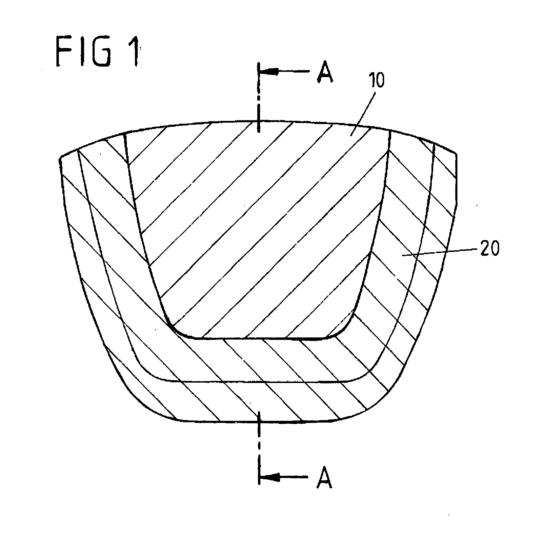

Die Figur 1 zeigt ein Ausführungsbeispiel eines Gassackmoduls, das eine Sichtfläche aufweist, die durch zwei unterschiedliche Segmente 10, 20 gebildet sind. Die beiden Segmente 10, 20 sind in der Darstellung der Figur 1 zur leichteren Unterscheidbarkeit unterschiedlich schraffiert dargestellt.

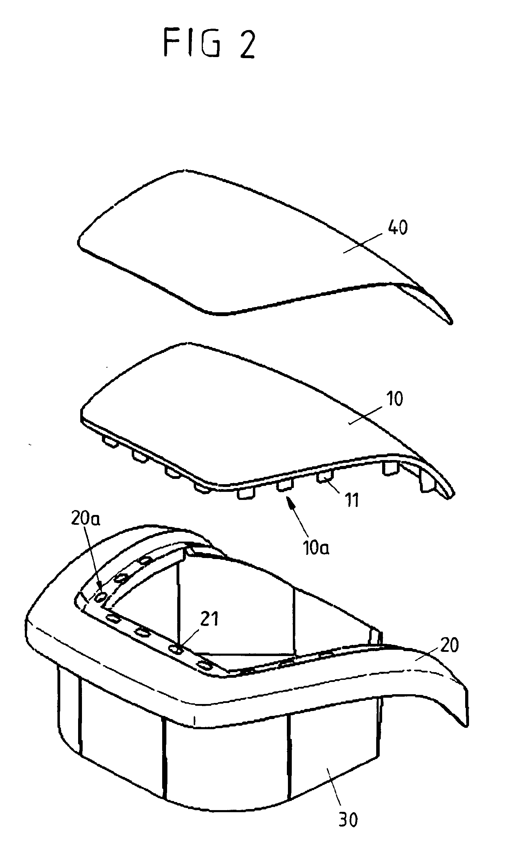

Wie der Explosionsdarstellung der Figur 2 entnommen werden kann, handelt es sich bei dem einen Segment um eine Abdeckkappe 10 des Gassackmoduls. Das andere Segment wird durch einen Kappenrahmen 20 gebildet, der an der dem Fahrzeuginneren zugewandten Oberseite eines Modulgehäuses 30 des Gassackmoduls ausgebildet ist. Das Modulgehäuse 30 dient der Aufnahme eines nicht dargestellten Gasgenerators und des Gassacks.

Bei dem Gassackmodul handelt es sich um ein Fahrer-Gassackmodul, das im Nabenbereich des Lenkrads des Fahrzeugs angeordnet ist. Die Figur 1 zeigt eine Draufsicht ohne Darstellung der Lenkradspeichen und des Lenkradkranzes aus Sicht eines Fahrers.

Gemäß der Figur 2 ist des Weiteren eine Kunststofffolie 40 vorgesehen, die beispielsweise eine Hochglanzfolie ist und auf der Abdeckkappe 10 angeordnet ist. Die Verbindung der Kunststofffolie 40 mit der Abdeckkappe 10 erfolgt dabei, bevor die Abdeckkappe 10 auf den Kappenrahmen 20 aufgesetzt wird. Die Verbindung kann beispielsweise durch Kleben, Heißprägen etc. erfolgen. In einer Ausgestaltung wird die Kunststofffolie 40 unter Ausbildung einer gemeinsamen Einheit von Kunststofffolie 40 und Abdeckkappe 10 mit einem spritzgußfähigen Kunststoff hinterspritzt, welcher dann die Abdeckkappe 10 bildet.

Die Abdeckkappe 10 weist durch die Kunststofffolie 40 beispielsweise eine glatte, hochglänzende Oberfläche auf. In Abhängigkeit von der Art und Ausgestaltung der Kunststofffolie können unterschiedlichste Farben, Glanzwerte, Oberflächenstrukturen und Dekorationen realisiert werden. In einer Ausgestaltung weist die Folie 40 dabei eine hohe Kratzfestigkeit auf. Die Abdeckkappe 10 bildet aufgrund der Oberflächenveredelung 40 einen Stylingbereich der Sichtfläche.

Zur Verbindung der mit der Kunststofffolie 40 versehenen Abdeckkappe 10 mit dem Kappenrahmen 20 sind beispielsweise Vorsprünge 11 in Form von Schweißdomen an der Abdeckkappe 10 ausgebildet, die in Aussparungen 21 des Kappenrahmens 20 eingreifen und in diesen beispielsweise mittels Ultraschall-Schweißen befestigt werden, wobei eine nicht lösbare mechanische Verbindung entsteht. Die Vorsprünge 11 bilden dabei eine mechanische Schnittstelle 10a der Abdeckkappe und die Aussparungen 21 eine mechanische Schnittstelle 20a des Kappenrahmens. Alternativ kann die Verbindung in anderer Weise unlösbar ausgebildet sein, z.B. durch Nieten oder Klebeflächen erfolgen.

Der Kappenrahmen 20 weist in einer Ausgestaltung keine Oberflächenveredelung auf. Es ist jedoch grundsätzlich möglich, auch den Kappenrahmen mit einer Oberflächenveredelung zu versehen.

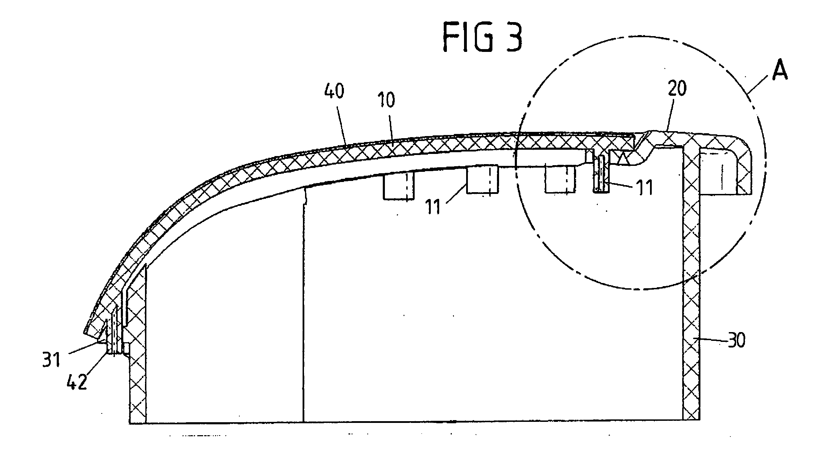

Die Figur 3 zeigt eine Schnittdarstellung der miteinander verbundenen Segmente 10, 20. Dabei ist zusätzlich zu erkennen, dass die Abdeckkappe 10 an ihrer einen Kante 42 an einem Vorsprung 31 des Modulgehäuses 30 schwenkbar an dem Modulgehäuse 30 befestigt ist. Weiter sind die Schweißdome 11 der Abdeckkappe 10 zu erkennen. Die Kunststofffolie 40 bildet die Oberfläche der Abdeckkappe 10.

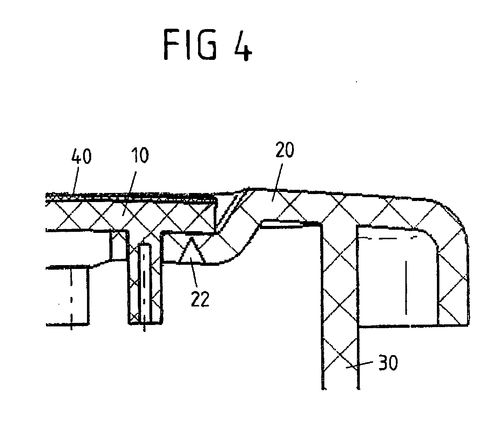

In der vergrößerten Darstellung der Figur 4, die den Teilbereich A der Figur 3 darstellt, ist eine Aufreißlinie 22 zu erkennen, die im Kappenrahmen 20 ausgebildet ist. Bei Entfalten des im Modulgehäuse 30 angeordneten Gassacks im Auslösefall reißt das Gehäuse entlang der Aufreißlinie 22 auf, wonach die Abdeckkappe 10, die nun nur noch an der einen Kante 42 am Modulgehäuse 30 befestigt ist, aufklappt. Das Aufreißen der Aufreißlinie 22 tangiert dabei nicht die unabhängig von der Aufreißlinie 22 ausgebildeten Schnittstellen 10a, 20a, die nicht öffnen.

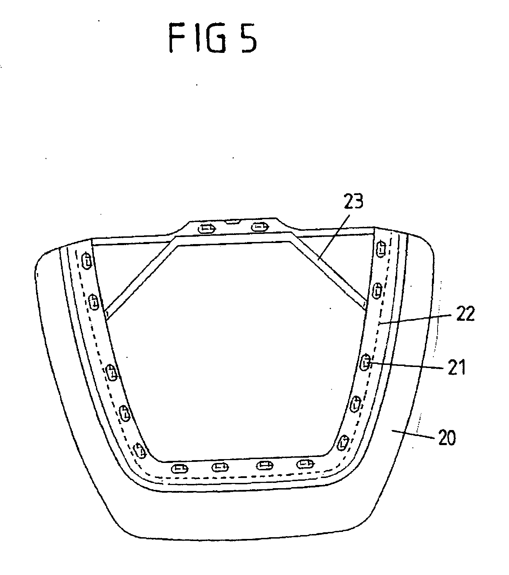

Die Aufreißlinie 22 ist ebenfalls in der Draufsicht der Figur 5 auf den Kappenrahmen 20 zu erkennen. Sie ist derart im Kappenrahmen 20 ausgebildet, dass die Aussparungen 21 der mechanischen Schnittstellen 10a, und damit die Befestigungsstellen zwischen dem Kappenrahmen 20 und der Abdeckkappe 10, im Auslösefall zusammen mit der Abdeckkappe 10 abreißen, ohne dass die Befestigungsstellen dabei öffnen würden. Anzahl, Form und Position der Aussparungen 21 bzw. Befestigungsstellen können in Abhängigkeit von der Form, Größe und dem Gewicht der Abdeckkappe 10 gewählt werden. In der Darstellung der Figur 5 sind des Weiteren Seitenwände 23 des Kappenrahmens 20 zu erkennen, die diesen strukturell verstärken.

Es wird darauf hingewiesen, dass der Übergang zwischen dem mit der Kunststofffolie 40 versehenen Segment 10 zu dem angrenzenden Kappenrahmen 20 aufgrund der Vorabapplikation der Kunststofffolie 40 klar abgegrenzt ist. Dies erhöht die Klarheit und Eleganz des Designs.

Weiter wird darauf hingewiesen, dass die Kunststofffolie 40 zusätzlich den Verbindungsbereich zwischen der Abdeckkappe 10 und dem Kappenrahmen 20, d.h. die Schnittstellen 10a, 20a (vgl. Figur 2) verdeckt. Eine ästhetisch nachteilige optische Erkennbarkeit des Verbindungsbereiches wird dadurch verhindert. Dementsprechend kann, wie in der Figur 5 angedeutet ist, die Aufreißlinie 22 des Kappenrahmens 10 auch perforiert ausgebildet sein, wodurch die Aufreißlinie 22 in einfacher Weise bereitgestellt wird. Die Ausbildung der Aufreißlinie 22 als Perforation ist möglich, da diese durch die Abdeckkappe 10 mit der Kunststofffolie 40 abgedeckt wird.

In einer alternativen Ausgestaltung (nicht dargestellt) kann die Aufreißlinie statt in dem Kappenrahmen 20 in der Abdeckkappe 10 ausgebildet sein. Bei Aufreißen der Aufreißlinie verbleiben die Befestigungsstellen zwischen dem Kappenrahmen 20 und der Abdeckkappe 10 am Kappenrahmen 20, ohne dass die Befestigungsstellen öffnen würden. Auch hier ist eine Ausgestaltung der Aufreißlinie durch eine Perforation möglich. Die optisch verdeckende Kunststofffolie 40 verhindert dabei wiederum eine Sichtbarkeit der Aufreißlinie. Im Auslösefall erfolgt das Aufreißen der Abdeckkappe durch den kaschierten Bereich hindurch, d.h. die Verbindung zwischen der Abdeckkappe 10 und der Kunststofffolie 40 wird ebenfalls aufgerissen.

In einer weiteren alternativen Ausgestaltung (nicht dargestellt) folgt die Aufreißlinie anders als in den Figuren 3 und 4 nicht im Wesentlichen den Segmentgrenzen bzw. der Verbindungslinie zweier Segmente, sondern weist einen davon abweichenden Verlauf auf. Sie kann sich dabei durch ein oder mehrere Segmente erstrecken. Sie ist dabei bevorzugt optisch durch eine Kunststofffolie oder ein anderes Oberflächenmaterial verdeckt, das im Aufreißfall ebenfalls mit aufgerissen ist. Durch die getrennte Ausbildung der Aufreißlinie und der mechanischen Schnittstellen zur Verbindung der Segmente können die Segmentgrenzen und durch diese definierte Stylingbereiche der Sichtfläche unabhängig von dem Öffnungsbereich für den Gassack gewählt werden.

In einer weiteren alternativen Ausgestaltung (nicht dargestellt) wird die Oberfläche der Abdeckkappe 10 nicht durch eine Kunststofffolie, sondern durch ein anderes Material wie z.B. ein Gewebe oder einen Lederzuschnitt veredelt.

Die Erfindung beschränkt sich in ihrer Ausgestaltung nicht auf die vorstehend dargestellten Ausführungsbeispiele, die lediglich beispielhaft zu verstehen sind. Beispielsweise kann die Sichtfläche durch in anderer Weise geformte Segmente gebildet werden oder die Verbindung der einzelnen Segmente in anderer Weise als beschrieben erfolgen. Weiter wird darauf hingewiesen, dass die vorliegende Erfindung anhand eines Fahrer-Gassackmoduls erläutert wurde, die Erfindung jedoch ebenso bei anderen Gassackmodulen mit einer Sichtfläche, insbesondere einem Beifahrer-Gassackmodul oder einem Knie-Gassackmodul realisiert werden kann.

## Patentansprüche

1. Gassackmodul für ein Fahrzeuginsassen-Rückhaltesystem, das einen Gassack umfasst und eine im eingebauten Zustand dem Fahrzeuginnenraum zugewandte Sichtfläche aufweist, die durch unterschiedliche Segmente (10, 20) gebildet ist, wobei mindestens zwei der Segmente (10, 20) optisch und/oder haptisch unterschiedliche Oberflächen aufweisen,
**dadurch gekennzeichnet, dass**
- mindestens zwei der Segmente (10, 20) der Sichtfläche jeweils mindestens eine mechanische Schnittstelle (10a, 20a) aufweisen, mittels derer sie unter Ausbildung eines Verbindungsbereichs mechanisch mit mindestens einem der anderen Segmente (10, 20) verbindbar sind, und
- mindestens eines der Segmente (20) der Sichtfläche mindestens eine Aufreißlinie (22) ausbildet, wobei bei Aufreißen der Aufreißlinie (22) im Auslösefall eine Öffnung in der Sichtfläche entsteht, durch die der Gassack aus dem Gassackmodul austreten kann,
- wobei die mechanischen Schnittstellen (10a, 20a) derart ausgebildet sind, dass sie bei einem Aufreißen der Aufreißlinie (22) Bestand haben und nicht öffnen.

2. Gassackmodul nach Anspruch 1, **dadurch gekennzeichnet, dass** die Aufreißlinie (22) derart ausgebildet ist, dass sie entlang einer mechanischen Schnittstelle (20a) verläuft.

3. Gassackmodul nach Anspruch 2, **dadurch gekennzeichnet, dass** die Aufreißlinie (22) entlang der durch die mechanische Schnittstelle (20a) bereitgestellten Verbindungslinie eines Segments (20) mit einem anderen Segment (10) verläuft.

4. Gassackmodul nach einem der Ansprüche 1 bis 3, **dadurch gekennzeichnet, dass** die Aufreißlinie (20) im Wesentlichen entlang mindestens einer Segmentgrenze verläuft.

5. Gassackmodul nach Anspruch 1, **dadurch gekennzeichnet, dass** die Aufreißlinie derart in einem Segment ausgebildet ist, dass sie nicht der mechanischen Schnittstelle des Segments folgt.

6. Gassackmodul nach einem der vorangehenden Ansprüche, **dadurch gekennzeichnet, dass** die unterschiedlichen Segmente (10, 20) durch eine Abdeckkappe (10), die im Auslösefall zumindest teilweise aufklappt und/oder aufreißt, und/oder durch sichtbare Bereiche (20) eines Modulgehäuses (30) des Gassackmoduls gebildet sind.

7. Gassackmodul nach Anspruch 6, **dadurch gekennzeichnet, dass** die Sichtfläche durch ein erstes Segment (10), das durch die Abdeckkappe gebildet ist, und ein zweites Segment (20), das durch einen an dem Modulgehäuse ausgebildeten Kappenrahmen gebildet ist, gebildet wird.

8. Gassack nach einem der Ansprüche 1 bis 5, **dadurch gekennzeichnet, dass** die unterschiedlichen Segmente durch unterschiedliche Segmente der Abdeckkappe des Gassackmoduls gebildet sind.

9. Gassackmodul nach einem der vorangehenden Ansprüche, **dadurch gekennzeichnet, dass** die durch zwei Schnittstellen gebildete mechanische Verbindung zwischen zwei Segmenten unlösbar ist.

10. Gassackmodul nach einem der vorangehenden Ansprüche, **dadurch gekennzeichnet, dass** die mechanischen Schnittstellen zur Verbindung der unterschiedlichen Segmente Formschlusselemente (11, 21) aufweisen.

11. Gassackmodul nach einem der vorangehenden Ansprüche, **dadurch gekennzeichnet, dass** mindestens eines der Segmente (10, 20) ein Grundmaterial (10) und ein auf dem Grundmaterial (10) vollflächig angeordnetes Oberflächenmaterial (40) aufweist.

12. Gassackmodul nach Anspruch 11, **dadurch gekennzeichnet, dass** mindestens eines der Segmente (10, 20) ein Oberflächenmaterial (40) aufweist, das mit einem Spritzgussmaterial als Grundmaterial (10) hinterspritzt ist.

13. Gassackmodul nach Anspruch 11 oder 12, **dadurch gekennzeichnet, dass** das Oberflächenmaterial (40) eine Kunststofffolie, ein Gewebe oder ein Lederzuschnitt ist.

14. Gassackmodul nach einem der Ansprüche 11 bis 13, **dadurch gekennzeichnet, dass** eine Aufreißlinie in dem Grundmaterial eines Segments verläuft und dabei von dem Oberflächenmaterial optisch verdeckt ist.

15. Gassackmodul nach einem der vorangehenden Ansprüche, **dadurch gekennzeichnet, dass** die unterschiedlichen Segmente (10, 20) Oberflächen aufweisen, die sich dadurch unterscheiden, dass sie ein unterschiedliches Oberflächenmaterial und/oder eine unterschiedliche Lackierung aufweisen.

## Claims

1. Airbag module for a vehicle occupant restraint system comprising an airbag and having a visible surface, facing the vehicle interior when installed, which is formed by different segments (10, 20), wherein at least two of the segments (10, 20) have optically and/or haptically different surfaces,
**characterized in that**
- at least two of the segments (10, 20) of the visible surface each have at least one mechanical interface (10a, 20a) by means of which they can be mechanically connected to at least one of the other segments (10, 20), forming a connecting area, and
- at least one of the segments (20) of the visible surface forms at least one tear line (22), wherein upon tearing open the tear line (22) in the event of deployment an opening in the visible surface is produced, through which the airbag can exit the airbag module,
- wherein the mechanical interfaces (10a, 20a) are designed in such a way that upon tearing open the tear line (22) they endure and do not open.

2. Airbag module according to Claim 1, **characterized in that** the tear line (22) is designed in such a way that it runs along a mechanical interface (20a).

3. Airbag module according to Claim 2, **characterized in that** the tear line (22) runs along the connecting line, provided by the mechanical interface (20a), of one segment (20) with another segment (10).

4. Airbag module according to any of Claims 1 to 3, **characterized in that** the tear line (20) essentially runs along at least one segment boundary.

5. Airbag module according to Claim 1, **characterized in that** the tear line is formed in one segment in such a way that it does not follow the mechanical interface of the segment.

6. Airbag module according to any of the preceding claims, **characterized in that** the different segments (10, 20) are formed by a cover cap (10), which in the event of deployment swings and/or tears open at the least in part, and/or by visible areas (20) of a module casing (30) of the airbag module.

7. Airbag module according to Claim 6, **characterized in that** the visible surface is formed by a first segment (10), formed by the cover cap, and a second segment (20), formed by a cap frame formed on the module casing.

8. Airbag according to any of Claims 1 to 5, **characterized in that** the different segments are formed by different segments of the cover cap of the airbag module.

9. Airbag module according to any of the preceding claims, **characterized in that** the mechanical connection between two segments, formed by two interfaces, is inseparable.

10. Airbag module according to any of the preceding claims, **characterized in that** the mechanical interfaces for connecting the different segments have positive locking elements (11, 21).

11. Airbag module according to any of the preceding claims, **characterized in that** at least one of the segments (10, 20) has a basic material (10) and a surface material (40) located on the whole surface of the basic material (10).

12. Airbag module according to Claim 11, **characterized in that** at least one of the segments (10, 20) has a surface material (40) which is back injection moulded with an injection moulding material as basic material (10).

13. Airbag module according to Claim 11 or 12, **characterized in that** the surface material (40) is a plastic foil, a fabric or a leather cutting.

14. Airbag module according to any of Claims 11 to 13, **characterized in that** a tear line runs in the basic material of one segment and is here visually concealed by the surface material.

15. Airbag module according to any of the preceding claims, **characterized in that** the different segments (10, 20) have surfaces which differ **in that** they have a different surface material and/or a different coat of varnish.

## Revendications

1. Module de sac gonflable pour un système de retenue d'occupant de véhicule qui comporte un sac gonflable et présente une surface apparente tournée à l'état intégré vers l'habitacle du véhicule, laquelle surface est formée par des segments différents (10, 20), au moins deux des segments (10, 20) présentant des surfaces différentes optiquement et/ou au toucher,
**caractérisé en ce que**
- au moins deux des segments (10, 20) de la surface apparente présentent respectivement au moins une interface mécanique (10a, 20a), à l'aide de laquelle ils peuvent être reliés en réalisant une zone de liaison mécanique avec au moins l'un des autres segments (10, 20), et
- au moins l'un des segments (20) de la surface apparente réalise au moins une ligne de déchirure (22), une ouverture apparaissant dans la surface apparente lors du déchirement de la ligne de déchirure (22) en cas de déclenchement, par laquelle le sac gonflable peut sortir du module de sac gonflable,
- les interfaces mécaniques (10a, 20a) étant réalisées de manière à persister et à ne pas s'ouvrir lors d'un déchirement de la ligne de déchirure (22).

2. Module de sac gonflable selon la revendication 1, **caractérisé en ce que** la ligne de déchirure (22) est réalisée de manière à s'étendre le long d'une interface mécanique (20a).

3. Module de sac gonflable selon la revendication 2, **caractérisé en ce que** la ligne de déchirure (22) s'étend le long de la ligne de liaison mise à disposition par l'interface mécanique (20a) d'un segment (20) avec un autre segment (10).

4. Module de sac gonflable selon l'une quelconque des revendications 1 à 3, **caractérisé en ce que** la ligne de déchirure (20) s'étend sensiblement le long d'au moins une limite de segment.

5. Module de sac gonflable selon la revendication 1, **caractérisé en ce que** la ligne de déchirure est réalisée dans un segment de manière à ne pas suivre l'interface mécanique du segment.

6. Module de sac gonflable selon l'une quelconque des revendications précédentes, **caractérisé en ce que** les segments différents (10, 20) sont formés par un capuchon de recouvrement (10) qui s'ouvre et/ou se déchire au moins en partie en cas de déclenchement, et/ou par des zones apparentes (20) d'un boîtier (30) du module de sac gonflable.

7. Module de sac gonflable selon la revendication 6, **caractérisé en ce que** la surface apparente est formée d'un premier segment (10) qui est formé par le capuchon de recouvrement, et un second segment (20) qui est formé par un cadre de capuchon réalisé sur le boîtier de module.

8. Module de sac gonflable selon l'une quelconque des revendications 1 à 5, **caractérisé en ce que** les segments différents sont formés par des segments différents du capuchon de recouvrement du module de sac gonflable.

9. Module de sac gonflable selon l'une quelconque des revendications précédentes, **caractérisé en ce que** la liaison mécanique formée par deux interfaces entre deux segments ne peut pas être détachée.

10. Module de sac gonflable selon l'une quelconque des revendications précédentes, **caractérisé en ce que** les interfaces mécaniques pour la liaison des différents segments présentent des éléments à complémentarité de forme (11, 21).

11. Module de sac gonflable selon l'une quelconque des revendications précédentes, **caractérisé en ce qu'**au moins l'un des segments (10, 20) présente un matériau de base (10) et un matériau de surface (40) disposé sur toute la surface du matériau de base (10).

12. Module de sac gonflable selon la revendication 11, **caractérisé en ce qu'**au moins l'un des segments (10, 20) présente un matériau de surface (40) qui est injecté par derrière avec un matériau de moulage par injection servant de matériau de base (10).

13. Module de sac gonflable selon la revendication 11 ou 12, **caractérisé en ce que** le matériau de surface (40) est un film plastique, un tissu ou une pièce de cuir.

14. Module de sac gonflable selon l'une quelconque des revendications 11 à 13, **caractérisé en ce qu'**une ligne de déchirure s'étend dans le matériau de base d'un segment et est recouvert optiquement par le matériau de surface.

15. Module de sac gonflable selon l'une quelconque des revendications précédentes, **caractérisé en ce que** les segments différents (10, 20) présentent des surfaces qui se distinguent du fait qu'elles présentent un matériau de surface différent et/ou une laque différente.
